# EUROPEAN PATENT APPLICATION

(11) **EP 2 075 961 A1**
(43) Date of publication of application: **01.07.2009**
(21) Application number: 07253554.5
(22) Date of filing: 07.09.2007
(51) Int. Cl.: H04L 12/56

(54) **Network control**

(71) Applicant: British Telecommunications public limited company, 81 Newgate Street London EC1A 7AJ (GB)
(72) Inventor: The designation of the inventor has not yet been filed
(74) Representative: Lloyd, Barry George William

(57) **Abstract**

A first network such as a passive optical network 1 is connected to a second network such as wireless network 2. The second network has an interface that receives packets of data from the first network and controls, in dependence on the loading information signalled to it by the first network, the transmission of data from the second network to the first network ;

The loading information is signalled to the second network by marking a proportion of packets transmitted from the first network to the second, this proportion being a function of the degree of loading of the first network; and the interface counts the proportion of received packets so marked.

## Description

The present application is concerned with network control, and more particularly in situations where a first network communicates with a second network.

The present invention is defined in the claims.

One embodiment of the invention will now be described, by way of example with reference to the accompanying drawings.

A first telecommunications network 1 is connected to one or more second networks 2. In this example, the first network is a passive optical network (PON) whilst the second network (only one of which is shown) is a wireless local area network (LAN) connected to the PON via an ADSL link 3.

Passive Optical Networks are a point-to-multipoint transport network technology based on fibre optics. A single fibre connects an Optical Line Terminator (OLT) 10 to an optical splitter 11, which in turn supplies an optical signal to a number of Optical Network Units (ONUs) 12/1, 12/2, ... 12/N. The OLT may be connected to a third network such as the internet 4.

Each ONU is equipped with n queues serving n priority classes (with P0 being highest priority and Pn being lowest). When a packet is received from an ADSL line (i.e. packets are flowing in the upstream direction), the ONU classifies its type (based on the priority field defined by 802.1 p) and put them in its respective queue. All the queues in each ONU share a common memory buffer. It is said that if an arriving packet with priority Pi finds a full buffer in the ONU, it can delete lower priority packets from their queues.

An ONU 12 is connected to either one or a number of ADSL lines. Each ADSL line may be connected to a wireless hub 20 of a wireless LAN 2. This wireless hub in turn may be shared by multiple users and applications: one such wireless terminal 22 is shown. With a QoS-enabled wireless hub (defined by IEEE 802.11 e), applications with specific requirements (delay sensitive and loss sensitive) can be scheduled accordingly.

To ensure QoS-provision, the wireless hub has an admission control module 21. Based on the congestion feedback it gathers from ONU, it can work out the amount of upstream bandwidth available. With that, it should limit the admission of new applications (especially time sensitive ones) at its admission control module to ensure the packets get transmitted.

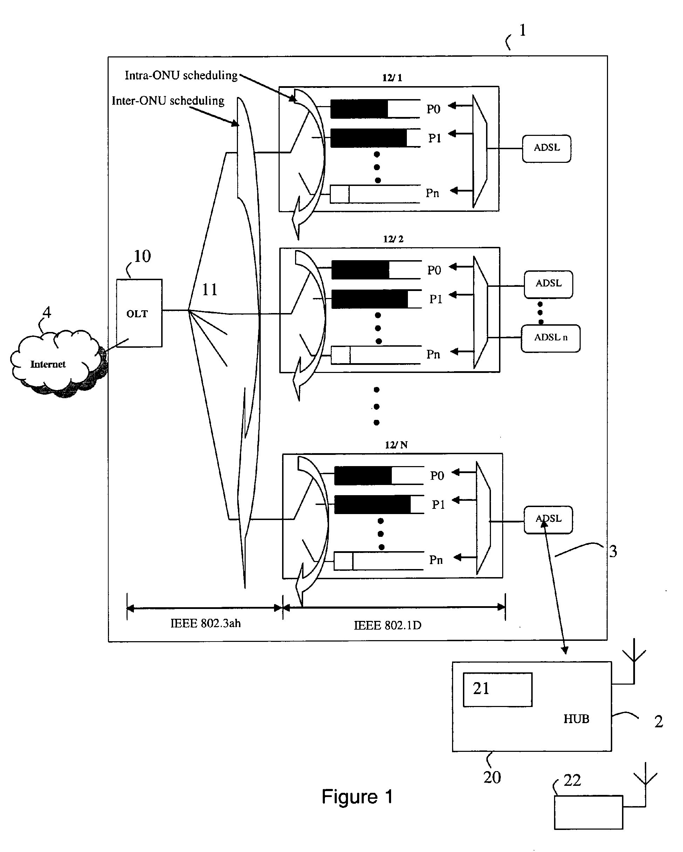

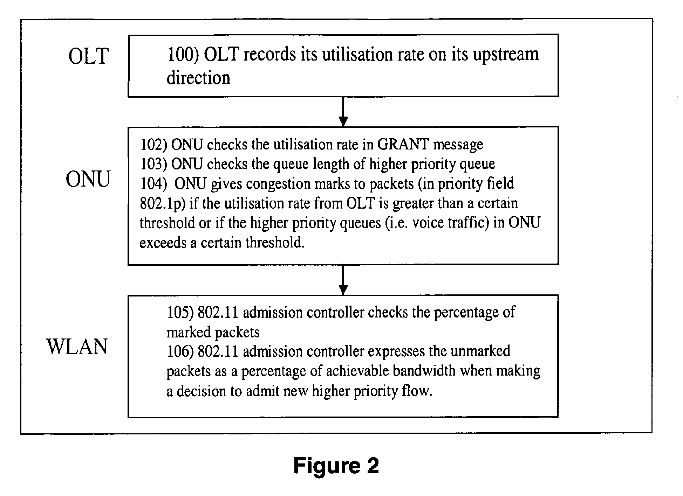

Figure 3 is a flowchart showing operation of the system:
100 The OLT records its total upstream bandwidth and its current utilisation rate in the upstream direction, that is to say, the ratio of the actual bandwidth that the OLT is using (in total, for all its ONUs) to this total upstream bandwidth. If desired, it may also measure the downstream bandwidth and utilisation.
101 The OLT sends congestion notification to the ONU and the wireless network In this example the OLT sends a Gate message (as defined in the standard) and inserts 4 bytes of "vendor specific fields" into the "Pad/Reserved" field of the Gate message. The first byte indicates the total upstream bandwidth at the OLT. The second byte indicates the utilisation rate of the upstream bandwidth. If required, the third byte can indicate the total downstream bandwidth at the OLT, and the fourth byte the utilisation rate of the downstream bandwidth. Each byte may be coded as 2-digit binary-coded decimal, with the first 4 bits reflecting the tens, and the last 4 bits reflecting the units. For example, 73% utilisation would be represented by 0111 0011.

Then, the ONU responds to congestion marks/packets from OLT:
102 The ONU checks the utilisation rate in the GATE message
103 The ONU checks the queue length of the higher priority queues
104 The ONU gives congestion marks to packets if the utilisation rate from OLT is greater than a certain threshold or if the higher priority queues (i.e. voice traffic) in ONU exceeds a certain threshold.

In this example the ONU uses the 802.1 p priority field to signal congestion level via the ADSL link to the to the WLAN. Even though the IEEE standard supports up to eight priority level definitions, many vendors support just two or three priority queues in their switches, and not all eight. For example, a switch might assign 802.1 p values of 0 to 3 to a low-priority queue, and priority levels 4 to 7 to a high-priority queue. In essence, this reduces the priority levels to just two, so any data defined as high priority and classified as a level 7 priority rides alongside priority level 4 traffic.

The priority field is carried by conventional downstream packets, that also carry data; however if it is required to send this congestion information at a time when there is no downstream data, dummy packets can be generated for the purpose. necessary during periods when

The proposal here is to do a re-mapping of the 802.1 p priority field. Table 1 shows the existing 802.1 p mapping.

**Table 1 802.1p Priority Field (current mapping)**

| **Tag Value** | **Priority** | **Acronym** | **Traffic Type** |
|---|---|---|---|
| 0 (default) | 5 (default) | BE | Best Effort |
| 1 | 7 (lowest) | BK | Background |
| 2 | 6 (low) | - | Spare |
| 3 | 4 (better) | EE | Excellent Effort |
| 4 | 3 | CL | Controlled Load |
| 5 | 2 | VI | Video < 100ms latency |
| 6 | 1 | VO | Voice < 10 ms latency |
| 7 | 0 (highest) | NC | Network Control |

**Table 2**

| **Tag Value** | **Traffic Types** | **Congestion or No Congestion marked** |
|---|---|---|
| 0 (**0**00) | Traffic Type 1 | No Congestion Marked |
| 1 (**1**00) | Traffic Type 1 | Congestion Marked |
| 2 (**0**10) | Traffic Type 2 | No Congestion Marked |
| 3 (**1**10) | Traffic Type 2 | Congestion Marked |
| 4 (**0**01) | Traffic Type 3 | No Congestion Marked |
| 5 (**1**01) | Traffic Type 3 | Congestion Marked |
| 6 (**0**11) | Traffic Type 4 | No Congestion Marked |
| 7 (**1**11) | Traffic Type 4 | Congestion Marked |

Although there are originally 7 traffic types in the 802.1 p Priority Field, most of them are not being used. Very often, resulting in 2-3 traffic types being used. We suggest re-mapping these 2-3 traffic types into our proposed table above.
Best Effort Traffic → Traffic Type 1 (00)
Excellent Effort → Traffic Type 2 (10)
Controlled Load/Higher Priority Traffic → Traffic Type 3 (01)
Network Control → Traffic Type 4 (11)

Traffic Type 4 will have higher priority precedence compared to Traffic Type 3, and so forth.

The least significant bit of the Tag Value represents if the packet is congestion marked or not. If the LSB is '1', it indicates it is congestion marked. If the LSB is '0', it indicates that it is not congestion marked.

These congestion marks could be expressed as a percentage of achievable total admitted high priority traffic. A simple method of doing this is to mark a proportion of packets according to the upstream utilisation of the ONU. For example, if the upstream utilisation is 78% then the ONU marks 78% of the downstream packets. In this way, the number of congestion marked packets will be counted at the wireless hub, and it will understand how much more higher priority traffic the ONU could support, before it could be downgraded to a lower priority or dropped during congestion.

Alternatively, one might choose a threshold graph approach in which no marking occurs until the utilisation rate reaches a certain level - say, 60% or 70%. The amount of packets being marked is perhaps slightly more than what the utilisation rate is, in this case, we can respond earlier to congestion.

If the higher priority queues (i.e. voice traffic) in ONU exceeds a certain threshold, notification (in the form of markings) should be sent to the end nodes (connected to the ONU). There may be one or a number of end nodes connected to each ONU. Congestion markings are needed, otherwise these high priority packets will eventually be dropped at the ONU (even before travelling to the OLT). The markings allocated will be similar to those congestions marks from OLT to ONU. For e.g., if 80% of higher priority queues ONU are congested, 80% of the downstream packets (from ONU to end nodes) should be marked accordingly.

If at the ONU the congestion experienced is at 80% and if the congestion marks it received at the OLT is at 90%, it should adjust it's downstream packets (from ONU to end nodes) to have 90% congestion marked instead.

Wireless network respond to congestion marks from ONU:
105 802.11 admission controller checks the percentage of marked packets, so that if, for example, 6 in 10 downstream packets are marked, it indicates that the upstream utilisation is at 60%. Preferably this variable should be updated with every new downstream packet received, e.g. using a sliding window.
106 802.11 admission controller expresses the unmarked packets as a percentage of achievable bandwidth when making a decision to admit new higher priority flow.

In addition to this, the ONU sends control packets to the wireless hubs periodically stating two important parameters, (1) how much bandwidth it is granted from the OLT, and (2) how many end user points are connected (active) to the ONU.

An example of how admission control module in wireless network could respond to feedback from ONU is given below. If there is 90% congestion marked packets at the downstream, the admission control module in the wireless could update its new achievable high priority upstream traffic.
new achievable high priority traffic at end user point = % of unmarked congestion packets x achievable total high priority upstream traffic(depends on how much bandwidth is granted from OLT) / No. of end user points.

For example, if 20 Mbps is granted from the OLT and there are 4 end user points to an ONU, and if 90% of packets at the downstream are congestion marked.
New achievable total high priority traffic at end user point = 0.1 x 20Mbps / 4 = 500 kbps

So, there's only 500 kbps upstream bandwidth available for each of the end user point (in this case, a wireless hub). At the wireless hub, it only admits a new high priority flow if it's less than 500kbps (upstream).

```
 if (bandwidth of new flow request > (new achievable high
 priority traffic at end user point))
 {
 admit new flow;
 }
 else{
 reject flow;
 }
```

## Claims

1. A telecommunications system comprising a first network and a second network; wherein
(a) the first network has means operable to send packets of data to the second network;
(b) the first network has means operable to signal network loading information to the second network;
(b) the second network has an interface operable to receive packets of data from the first network and to control, in dependence on the loading information, the transmission of data from the second network to the first network ;
wherein the means operable to signal network loading information to the second network is arranged to do so by marking a proportion of packets transmitted from the first network to the second, this proportion being a function of the degree of loading of the first network;
and wherein the interface of the second network is operable to count the proportion of received packets so marked.

2. A telecommunications system according to claim 1 in which the proportion of packets marked is proportional to the network loading.

3. A telecommunications system according to claim 1 in which packets are marked only when the network loading exceeds a threshold.

4. A telecommunications system according to claim 1, 2 or 3 in which the interface of the second network is operable to evaluate the proportion of marked packets during a sliding window.

5. A telecommunications system according to any one of the preceding claims in which the first network is an optical network.

6. A telecommunications system according to any one of the preceding claims in which the second network is a wireless network.
